# EUROPÄISCHE PATENTSCHRIFT

(11) **EP 3 688 537 B1**
(45) Veröffentlichungstag und Bekanntmachung des Hinweises auf die Patenterteilung: **19.01.2022**
(21) Anmeldenummer: 18756235.0
(22) Anmeldetag: 17.08.2018
(51) Int. Cl.: G05D 1/02

(54) **VERFAHREN, VORRICHTUNG UND COMPUTERPROGRAMM ZUM BETREIBEN EINES ROBOTER-STEUERUNGSSYSTEMS**
METHOD, DEVICE AND COMPUTER PROGRAM FOR OPERATING A ROBOT CONTROL SYSTEM
PROCÉDÉ, DISPOSITIF ET PROGRAMME INFORMATIQUE POUR FAIRE FONCTIONNER UN SYSTÈME DE COMMANDE DE ROBOT

(30) Priorität: 29.09.2017 DE 102017217412
(43) Veröffentlichungstag der Anmeldung: 05.08.2020
(73) Patentinhaber: Robert Bosch GmbH, 70442 Stuttgart (DE)
(72) Erfinder: DOELLINGER, Johannes Maximilian, 71229 Leonberg (DE)
(86) Internationale Anmeldenummer: PCT/EP2018/072347
(87) Internationale Veröffentlichungsnummer: WO 2019/063196

(56) Entgegenhaltungen:
- EP-A1- 3 091 370
- DE-A1-102013 203 239
- DE-A1-102015 119 501

## Beschreibung

### Technisches Gebiet

Die Erfindung betrifft ein Verfahren zum Betreiben eines Robotersteuerungssystems, welches ein maschinelles Lernsystem umfasst, das abhängig von einer Karte, welche einen Aktionsraum des Roboters umfasst, einen Bewegungsverlauf von zumindest einem Objekt in dem Aktionsraum des Roboters ermittelt. Ebenso betrifft die Erfindung ein Computerprogramm und eine Vorrichtung, die eingerichtet sind, das Verfahren auszuführen.

### Stand der Technik

Die EP 2 960 741 A2 offenbart einen autonomen Serviceroboter, insbesondere einen autonomen Rasenmäher oder Saugroboter, mit einer optischen Erfassungsvorrichtung für eine Umfelderfassung. Es wird vorgeschlagen, dass die optische Erfassungsvorrichtung eine Laufzeitmesseinheit aufweist, die zumindest teilweise eine Umfelderfassung mittels einer Laufzeitmessung durchführt und zumindest für eine Hinderniserfassung vorgesehen ist.

DE 10 2015 119 501 offenbart eine Aufteilung einer Karte eines Robotereinsatzgebietes eines autonomen mobilen Roboters.

DE 10 2013 203 239 offenbart ein Verfahren zur Vorhersage der Position eines Objekts im Umfeld eines Fahrzeugs

EP 3 091370 offenbart ein Verfahren zum Bestimmen sicherer Fahrzeugtrajektorien für ein Fahrzeug, das mit Sensoren zum Überwachen der Umgebung unter Berücksichtigung von Erfassungsbeschränkungen ausgestattet ist.

### Vorteile der Erfindung

Das Verfahren mit den Merkmalen des unabhängigen Anspruchs 1 hat demgegenüber den Vorteil, dass ein Roboter derart gesteuert wird, dass dieser den Bewegungsverlauf von zumindest einem Menschen, in seiner Umgebung nicht beeinträchtigt. Demnach besitzt der Roboter ein sozialkompatibles Verhalten und ist daher durch seine defensive Mensch-Roboter-Interaktionssteuerung für viele unterschiedliche Anwendungsbereiche geeignet. Des Weiteren hat die Erfindung den Vorteil, dass durch das maschinelle Lernsystem der Bewegungsverlauf eines Objektes in der Umgebung des Roboters gelernt werden kann. Dadurch müssen keine aufwendigen Simulationen oder Berechnungen während des Betriebs des Roboters durchgeführt werden, um Bewegungsverläufe von Objekten in der Umgebung zu ermitteln. Denn das maschinelle Lernsystem hat einen Zusammenhang der Bewegungsverläufe der Objekte relativ zu dem Aktionsraum des Roboters gelernt und kann deshalb einen Bewegungsverlauf zumindest eines Objektes auch in unbekannten oder unvollständigen Umgebungen, wie z. B. auf Kartenausschnitten, schnell und einfach ermitteln. Die hierfür üblicherweise verwendeten Berechnungsmethoden können keine oder sehr ungenaue Bewegungsverläufe auf Kartenausschnitten berechnen, da zu wenige Informationen zur Berechnung vorhanden sind. Ebenso ist das maschinelle Lernsystem im Betrieb des Roboters deutlich recheneffizienter als eine Simulation, da das Ergebnis abhängig von konstanten Parametern des maschinellen Lernsystems bestimmt wird.

### Offenbarung der Erfindung

In einem ersten Aspekt betrifft die Erfindung ein Verfahren zum Betreiben eines Robotersteuerungssystems. Das Robotersteuerungssystem umfasst ein maschinelles Lernsystem, welches eingerichtet ist, abhängig von einer Karte oder einem Ausschnitt der Karte, die einen Aktionsraum umfasst, in dem sich der Roboter bewegen kann, eine Größe zu ermitteln. Diese Größe charakterisiert einen Bewegungsverlauf zumindest eines Objektes, das sich in dem Aktionsraum der Karte oder in dem Aktionsraum des Ausschnitts der Karte bewegen kann. Das Verfahren umfasst folgende Schritte:
- Bereitstellen wenigstens einer Trainingskarte, welche einen Trainingsaktionsraum, in dem sich der Roboter bewegen kann, umfasst.
- Eintragen einer Größe, die den Bewegungsverlauf des zumindest eines Objektes charakterisiert, das sich in dem Trainingsaktionsraum bewegen kann, in dem Aktionsraum der Trainingskarte.
- Anlernen des maschinellen Lernsystems. Beim Anlernen des maschinellen Lernsystems wird eine vom maschinellen Lernsystem ermittelte Größe auf einem vorgebbaren Ausschnitt der Trainingskarte der eingetragenen Größe angenähert. Dabei charakterisiert die ermittelte Größe den Bewegungsverlauf des zumindest eines Objektes. Die eingetragene Größe charakterisiert den Bewegungsverlauf des zumindest eines Objektes und ist auf dem vorgebbaren Ausschnitt der Trainingskarte eingetragen.

Das Eintragen der Größe, die den Bewegungsverlauf des zumindest eines Objektes charakterisiert, kann beispielsweise anhand eines Bewegungsmodells und/oder einer Messung erfolgen. Das Anlernen kann mittels eines Anlernsystems erfolgen, welches abhängig von einem ermittelten Ergebnis des maschinellen Lernsystems relativ zu einem vorgegebenen Ergebnis, die Parametrisierung des maschinellen Lernsystems anpasst, sodass das ermittelte Ergebnis sich dem vorgegebenen Ergebnis annähert. Bevorzugt wird ein Unterschied zwischen dem ermittelten und dem vorgegebenen Ergebnis durch einen mathematisches Abstandsmaß charakterisiert, wobei der Unterschied von dem Anlernsystem zur Ermittlung der geeigneten Parametrisierung des maschinellen Lernsystems verwendet wird. Es sei angemerkt, dass das maschinelle Lernsystem sowohl ein Teil des Robotersteuerungssystems sein kann, als auch, dass das Robotersteuerungssystem ein maschinelles Lernsystem sein kann.

Die Trainingskarte ist eine Karte, welche zum Anlernen des maschinellen Lernsystems verwendet wird. Die Trainingskarte kann eine Karte einer simulierten Umgebung sein, die nicht notwendigerweise mit der tatsächlichen Umgebung des Roboters übereinstimmt. Bei einer simulierten Umgebung, kann der Trainingsaktionsraum ein simulierter Aktionsraum sein, der zum Anlernen des maschinellen Lernsystems genutzt werden kann.

Besonders vorteilhaft ist, wenn das maschinelle Lernsystem eingerichtet ist, die ermittelte Größe, die den Bewegungsverlauf von zumindest einem Objekt charakterisiert, abhängig von einer Form des Aktionsraums, insbesondere eines vorgebbaren Ausschnitts, der Karte zu ermitteln. Dabei wird die Form des Aktionsraums durch eine Begrenzung charakterisiert. Die Begrenzung kann beispielsweise durch ein Objekt, in der Umgebung des Roboters definiert sein. Dieses Objekt kann insbesondere ein statisches Objekt, wie z. B. eine Wand oder ein Auto, oder ein dynamisches Objekt, wie z. B. ein Mensch oder Roboter sein.

Ebenfalls besonders vorteilhaft ist, wenn der vorgebbare Ausschnitt der Trainingskarte in eine Mehrzahl von Zellen aufgeteilt wird, wobei jeder Zelle ein Wert zugeordnet ist, der die Größe, die den Bewegungsverlauf des zumindest eines Objektes charakterisiert, charakterisiert. Dieses Vorgehen weist den Vorteil auf, dass das maschinelle Lernsystem den Bewegungsverlauf durch die Mehrzahl von Zellen exakter lernen kann, aber auch, dass im Betrieb des Roboters der Bewegungsverlauf durch das maschinelle Lernsystem genauer ermittelt werden kann.

Vorteilhafterweise umfasst die Größe, die den Bewegungsverlauf zumindest eines Objektes charakterisiert, eine Auftrittswahrscheinlichkeit und/oder eine Übergangswahrscheinlichkeit und/oder eine Aufenthaltswahrscheinlichkeit.
Die Auftrittswahrscheinlichkeit ist eine Größe, die die Wahrscheinlichkeit des Auftretens des Bewegungsverlaufes des zumindest eines Objektes an einer Position im Aktionsraum charakterisiert. Die Übergangswahrscheinlichkeit ist eine Größe, die die Wahrscheinlichkeit des Übergangs des Bewegungsverlaufes des zumindest eines Objektes von einer Position zu wenigstens einer benachbarten Position im Aktionsraum charakterisiert. Die Aufenthaltswahrscheinlichkeit ist eine Größe, die die Wahrscheinlichkeit einer Dauer des Aufenthalts des Bewegungsverlaufes des zumindest eines Objektes an einer Position im Aktionsraum charakterisiert.

In einer vorteilhaften Weiterentwicklung wird eine Karte einer Umgebung des Roboters und ein Aktionsraum des Roboters auf dieser Karte ermittelt. Ebenso wird in der vorteilhaften Weiterentwicklung eine Größe, die den Bewegungsverlauf zumindest eines Objektes charakterisiert, anhand des Aktionsraums auf einem vorgebbaren Abschnitt dieser Karte mittels des maschinellen Lernsystems ermittelt. Die Karte umfasst dabei den Aktionsraum des Roboters, wobei dieser Aktionsraum dem tatsächlichen Aktionsraum des Roboters in seiner Umwelt entspricht. Es sei angemerkt, dass die Trainingskarte, welche zum Anlernen des maschinellen Lernsystems verwendet wird, eine Karte ist, welche eine simulierte Trainingsumgebung mit einem simulierten Trainingsaktionsraum des Roboters umfassen kann.

Vorteilhaft ist, wenn eine Bewegung des Roboters abhängig von der ermittelten Größe, die den Bewegungsverlauf von zumindest einem Objekt charakterisiert, gesteuert wird. Vorteilhaft ist auch, wenn zusätzlich die Bewegung des Roboters in Abhängigkeit des Aktionsraums des Roboters auf der Karte gesteuert wird.

In einer vorteilhaften Weiterentwicklung des Verfahrens, wird eine Trajektorie abhängig von der ermittelten Größe, die den Bewegungsverlauf des zumindest eines Objektes charakterisiert, geplant und eine Bewegung des Roboters abhängig von der geplanten Trajektorie gesteuert.

Besonders vorteilhaft ist, wenn die Bewegung des Roboters derart gesteuert wird, dass die Bewegung des Roboters den ermittelten Bewegungsverlauf des Objektes nicht beeinträchtigt.

Unter einem Beeinträchtigen des ermittelten Bewegungsverlaufs des zumindest eines Objektes wird verstanden, dass das Objekt auf Grund der Bewegung des Roboters seinen Bewegungsverlauf ändern muss und damit eine Beeinträchtigung seines Bewegungsverlaufs erfährt. Es kann aber auch darunter verstanden werden, dass der Roboter, durch seine geplante Bewegung, einen möglichen Bewegungsverlauf des Objektes kreuzt oder derart annähert, dass die Bewegung des Roboters zu einer möglichen Änderung des Bewegungsverlaufs des Objektes führen kann und damit den Bewegungsverlauf des Objekts beeinträchtigt.

Vorteilhaft ist, wenn eine Warteposition des Roboters abhängig von der ermittelten Größe, die den Bewegungsverlauf des zumindest eines Objektes charakterisiert, ermittelt wird, wobei die Warteposition eine Position im Aktionsraum des Roboters ist, welche durch die vom maschinellen Lernsystem ermittelten Größe, die den Bewegungsverlauf des zumindest eines Objektes charakterisiert, derart charakterisiert ist, dass diese ermittelte Größe an der Warteposition einen kleineren Wert, verglichen zu einer anderen Position im Aktionsraum des Roboters, umfasst, insbesondere, dass an dieser Position kein Bewegungsverlauf eines Objektes ermittelt wurde. An der Warteposition wird kein oder ein seltener Bewegungsverlauf von zumindest einem Objekt an dieser Position von dem Roboter erwartet und daher wird diese Position bevorzugt von dem Roboter zum Pausieren genutzt, um anschließend die geplante Bewegung fortzusetzen, ohne den Bewegungsverlauf des Objektes zu beeinträchtigen.

In einer vorteilhaften Weiterentwicklung des Verfahrens, wird bei der Planung der Trajektorie geprüft, ob ein Objekt entlang der geplanten Trajektorie vorhanden ist. Das vorhandene Objekt wird bei der Planung der Trajektorie entsprechend berücksichtig. Dies kann zum Beispiel bei einem Roboter im Haushalt, im Gastronomiebereich oder bei einem Industrieroboter, insbesondere einen Rasenmäher, Saugroboter, einem Serviceroboter als Kellner oder ein Transportroboter für Gegenstände im Produktionsumfeld, angewendet werden. Vorteilig ist auch die Verwendung des Verfahrens für jegliche Art von autonomen Maschinen welche das dynamische Verhalten von in ihrer Umgebung vorhersagen oder bestimmen müssen, um eine Bewegung auszuführen ohne dabei die Objekte in ihrer Bewegung zu beeinträchtigen.

In einer vorteilhaften Weiterentwicklung wird während der Ermittlung der Größe, die den Bewegungsverlauf des zumindest eines Objektes charakterisiert, mittels des maschinellen Lernsystems, eine erfasste Umgebungsgröße von zumindest einer Erfassungseinheit, welche in der Umgebung des Roboters positioniert ist, berücksichtigt. Dabei erfasst die Erfassungseinheit wenigstens eine Eigenschaft der Umgebung des Roboters, die verwendet wird, um den Bewegungsverlauf mittels des maschinellen Lernsystems unter Berücksichtigung der erfassten Umgebungsgröße exakter zu ermitteln.

In einem zweiten Aspekt betrifft die Erfindung ein Computerprogramm, welches Befehle umfasst, die beim Ausführen auf einem Computer bewirken, dass jeder Schritt des Verfahrens ausgeführt wird und ferner ein maschinenlesbares Speicherelement, auf welchem das Computerprogramm gespeichert ist.

In einem weiteren Aspekt betrifft die Erfindung eine Vorrichtung, die eingerichtet ist, jeden Schritt eines der Verfahren auszuführen.

Ausführungsbeispiele der vorliegenden Erfindung sind in den beiliegenden Zeichnungen dargestellt und in der nachfolgenden Beschreibung näher erläutert. Dabei zeigen:

### Kurze Beschreibung der Zeichnungen

- Fig. 1: eine schematische Darstellung eines Roboters, der sich in einem Raum eines Gebäudes befindet;
- Fig. 2: eine schematische Darstellung einer Karte des Gebäudes, in welchem sich der Roboter befindet, wobei ein Ausschnitt der Karte mittels eines maschinellen Lernsystems verarbeitet wird und auf dem Ausschnitt der Karte ein Bewegungsverlauf zumindest eines fiktiven Objektes dargestellt wird;
- Fig. 3: eine schematische Darstellung einer Ausführungsform des erfindungsgemäßen Verfahrens;
- Fig. 4: eine schematische Darstellung einer Ausführungsform eines Anlernsystems, welches zum Anlernen des maschinellen Lernsystems verwendet werden kann.

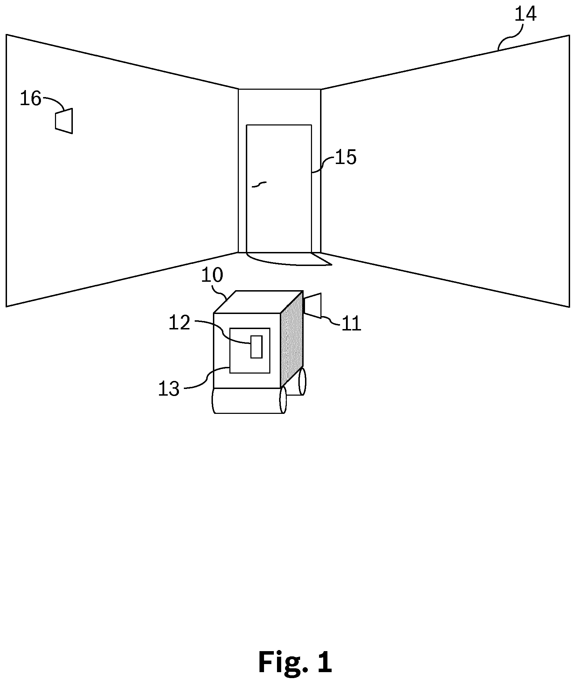

Figur 1 zeigt eine schematische Darstellung eines Roboters (10), welcher sich in einem Raum eines Gebäudes befindet. Der Raum wird durch beispielsweise eine Wand (14) und einer Türe (15) definiert. Denkbar ist aber auch, dass sich in diesem Raum, weitere Objekte, wie zum Beispiel ein Tisch oder ein Schrank, befinden, die ebenfalls den Raum definieren, welche aber nicht in Figur 1 dargestellt sind. Des Weiteren kann eine Erfassungseinheit (16) in der Umgebung des Roboters (10) positioniert sein. Diese Erfassungseinheit kann beispielsweise Eigenschaften der Umgebung erfassen und dem Roboter (10) übermitteln. Beispielshaft kann die Erfassungseinheit (16) eine aktuelle Raumtemperatur oder Außentemperatur ermitteln.

Der Roboter (10) umfasst dabei eine Umgebungserfassungseinheit (11), welche eingerichtet ist, eine Umgebung des Roboters zu erfassen und eine Karte der Umgebung des Roboters zu erstellen. Des Weiteren umfasst der Roboter (10) ein Robotersteuerungssystem (13). Das Robotersteuerungssystem (13) kann beispielsweise ein maschinelles Lernsystem, vorzugsweise ein tiefes neuronales Netz, und/oder eine Recheneinheit umfassen. Zusätzlich umfasst das Robotersteuerungssystem ein Speicherelement (12).

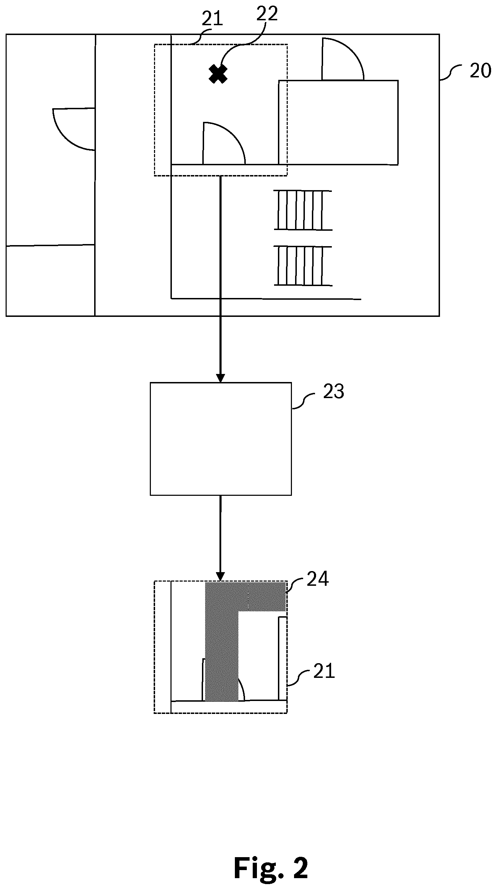

Figur 2 zeigt eine schematische Darstellung einer Karte (20) des Gebäudes, in welchem sich der Roboter (10) befindet. Da der Roboter (10) mittels der Umgebungserfassungseinheit (11) nur die sichtbare Umgebung des Roboters (10) und nicht alle Räume des Gebäudes erfasst, erfasst der Roboter nur einen Ausschnitt (21) der Karte (20) des Gebäudes. Denkbar ist auch, dass der Roboter (10) eine gegebene Karte vorliegen hat, auf welcher dieser seine Position (22) und den Ausschnitt (21) der Karte (20) seiner Umgebung bestimmt. Wenn der Roboter (10) in einem unbekannten Gebäude ohne gegebener Karte (20) unterwegs ist, kann dieser bevorzugt anhand von Vermessungs- und/oder Lokalisierungsalgorithmen, wie zum Beispiel SLAM (Simultaneous Localization and Mapping), seine Position (22) und den Ausschnitt (21) der Karte (20) ermitteln. Die vom Roboter (10) verwendete Karte (20) umfasst dabei einen Aktionsraum, in welchem sich der Roboter (10) auf der Karte bewegen kann.

Der ermittelte Ausschnitt (21) wird mittels des maschinellen Lernsystems (23) des Roboters (10) verarbeitet. Das maschinelle Lernsystem (23) ermittelt abhängig von einer Eingangsgröße, insbesondere einem Ausschnitt (21) der Karte (20), und einer Parametrisierung des maschinellen Lernsystems (23) einen Bewegungsverlauf (24) eines fiktiven Objektes auf dem Ausschnitt (21). Bevorzugt wird der Bewegungsverlauf (24) des fiktiven Objektes durch das maschinellen Lernsystem (23) abhängig von der Form des Aktionsraums des Roboters (10) auf dem Ausschnitt (21) der Karte (20) berechnet. Das fiktive Objekt kann beispielhaft eine Person, ein anderer Roboter oder ein Haustier sein, welches sich nicht in dieser Umgebung befindet, aber gewöhnlicher Weise in dieser Umgebung einen bestimmten Weg abhängig von der Form und/oder Aufbau des Aktionsraums des Roboters (10) wählt. Dieses Verhalten des fiktiven Objektes auf der Karte (20) wird durch ein Bewegungsverhalten des fiktiven Objektes charakterisiert und von dem maschinellen Lernsystem (23) erlernt.

Befindet sich beispielsweise in dem Aktionsraum des Roboters (10) eine Türe (15), bewegen sich üblicherweise fiktive Objekte in Richtung der Türe (15), woraus der Roboter (10) lernen kann, dass das Bewegungsverhalten (24) eines fiktiven Objektes mit höherer Wahrscheinlichkeit in Richtung der Türe (15) gerichtet ist, wenn in dem Aktionsraum des Roboters (10) sich eine Türe (15) befindet. Diesen gelernten Zusammenhang kann dann der Roboter (10) auf unbekannte Ausschnitte (21) anwenden.

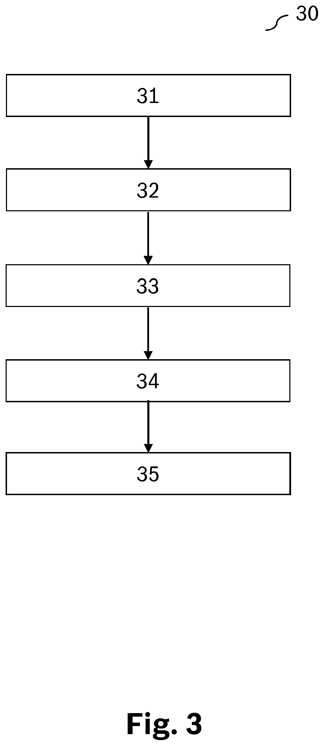

Figur 3 zeigt eine schematische Darstellung eines Verfahrens (30) zum Betreiben eines Robotersteuerungssystems, welches ein maschinelles Lernsystem (23) umfasst.

Das Verfahren (30) beginnt mit Schritt 31. In Schritt 31 wird dem Robotersteuerungssystem eine Trainingskarte zur Verfügung gestellt. Die Trainingskarte umfasst dabei einen Trainingsaktionsraum, in welchem sich der Roboter (10) bewegen kann. Bevorzugt wird in Schritt 31 dem Robotersteuerungssystem eine Mehrzahl von Trainingskarten zur Verfügung gestellt, sodass das Robotersteuerungssystem umfangreiche Lerndaten zur Verfügung stehen und damit das maschinelle Lernsystem (23) aufgabenspezifischer trainiert werden kann.

In dem nachfolgenden Schritt 32, wird anhand von beispielsweise einer Simulation und/oder von einer Messung, insbesondere aus gemessenen Bewegungsdaten, eine Größe, die den Bewegungsverlauf zumindest eines fiktiven Objektes charakterisiert, in den Trainingsaktionsraum des Roboters (10) auf der Trainingskarte eingetragen. Beispielhaft kann aber auch mit einem gegebenen Start- und Zielpunkt auf der Trainingskarte simuliert werden, wie sich ein/oder eine Mehrzahl von simulierten Objekten auf der Trainingskarte vom Startpunkt zum Zielpunkt bewegen. Bevorzugt abhängig von der Häufigkeit, wie oft das Objekt ein bestimmtes Gebiet auf der Trainingskarte zum Erreichen des Zielpunktes überschritten hat, kann die Größe, die den Bewegungsverlauf eines zumindest fiktiven Objektes charakterisiert, auf der Trainingskarte berechnet und insbesondere auf diesem Gebiet eingetragen werden. Optional wird in Schritt 32 die Trainingskarte in eine Vielzahl von Zellen aufgeteilt, wobei jeder Zelle ein Wert zugeordnet ist, der die Größe, die den Bewegungsverlauf des fiktiven Objektes charakterisiert, umfasst. Bevorzugt ist die Größe, die den Bewegungsverlauf eines zumindest fiktiven Objektes charakterisiert, eine Aufenthalts-, Auftritts- und/oder Übergangswahrscheinlichkeit des fiktiven Objektes.

Nachdem Schritt 32 abgeschlossen wurde, folgt Schritt 33. In Schritt 33 wird das maschinelle Lernsystem (23) des Roboters (10) angelernt. Das Anlernen des maschinellen Lernsystems (23) wird folgendermaßen ausgeführt. Das maschinelle Lernsystem (23) erhält einen vorgebbaren, insbesondere zufällig gewählten, Ausschnitt (21) der Trainingskarte. Das maschinelle Lernsystem (23) ermittelt abhängig von diesem Ausschnitt (21) eine Größe, die den Bewegungsverlauf eines fiktiven Objektes charakterisiert. Abhängig von dieser ermittelten Größe durch das maschinelle Lernsystem (23) und der eingetragenen Größe auf dem Ausschnitt (21) der Karte (20), die den Bewegungsverlauf des fiktiven Objektes charakterisiert, wird ein Fehler ermittelt. Vorzugsweise ist der Fehler ein mathematisches Abstandsmaß zwischen der ermittelten Größe und der eingetragenen Größe. Dieser Fehler wird dazu verwendet, um eine geeignetere Parametrisierung des maschinellen Lernsystems zu bestimmen, sodass sich die ermittelte Größe, die den Bewegungsverlauf des fiktiven Objektes charakterisiert, sich der eingetragenen Größe, die den Bewegungsverlauf des fiktiven Objektes charakterisiert, annähert.

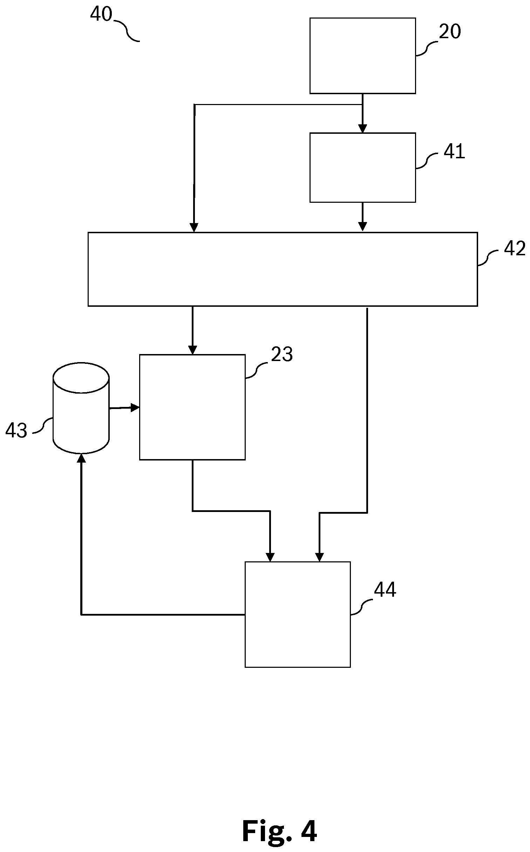

In Figur 4 wird eine beispielhafte schematische Darstellung eines Anlernsystems (40) dargestellt, mit welchem das maschinelle Lernsystem des Roboters (10) angelernt werden kann. Dabei kann das Anlernsystem (40) ein Teil des maschinellen Lernsystems (23) oder ein Teil des Robotersteuerungssystems (13) sein.

Das Anlernsystem (40) umfasst z.B. eine Experteneinheit (41), welche den Bewegungsverlauf eines fiktiven Objektes auf der Karte (20) durch eine Messung und/oder durch eine Simulation bestimmt. Der bestimmte Bewegungsverlauf wird anschließend von der Experteneinheit (41) auf der Karte (20) eingetragen. Nachfolgend wird sowohl von der Karte (20) als auch von der ausgegebenen Karte mit dem eingetragenen Bewegungsverlauf der Experteneinheit (41) derselbe Ausschnitt (21) ausgewählt. Dies wird beispielsweise mittels der Auswähleinheit (42) des Anlernsystems (40) ausgeführt. Bevorzugt wird der Ausschnitt (21) mittels der Auswähleinheit (42) zum Anlernen des maschinellen Lernsystems (23) zufällig ausgewählt.

Der Ausschnitt (21) der Karte (20) wird danach an das maschinelle Lernsystem (23) weitergeleitet. Das maschinelle Lernsystem (23) ermittelt abhängig von der Parametrisierung, welche in einer Datenbank (43) hinterlegt ist, eine Größe, die den Bewegungsverlauf zumindest eines fiktiven Objektes charakterisiert, auf dem Ausschnitt (21) der Karte (20). Anschließend wird diese ermittelte Größe durch das maschinelle Lernsystem (23) und die eingetragene Größe, die den Bewegungsverlauf des fiktiven Objektes charakterisiert, mittels dem Expertensystem (41) dafür verwendet, mit einem Optimierungsmodul (44) eine geeignete Parametrisierung des maschinellen Lernsystems (23) zu berechnen und in der Datenbank (43) zu hinterlegen. Vorzugsweise berechnet das Optimierungsmodul (44) aus einem Fehler zwischen der ermittelten und eingetragenen Größe die geeignete Parametrisierung des maschinellen Lernsystems (23).

Optional kann Schritt 33 mehrfach hintereinander ausgeführt werden, jeweils für beispielhaft unterschiedliche Ausschnitte der Trainingskarte und/oder für jeweils unterschiedliche Trainingskarten. Alternativ kann Schritt 33 auch mehrfach hintereinander ausgeführt werden, bis die Größe, die den Bewegungsverlauf des fiktiven Objektes charakterisiert, sich der eingetragenen Größe, die den Bewegungsverlauf des fiktiven Objektes charakterisiert, innerhalb eines vorgebbaren Toleranzbereichs an genähert hat. Vorzugsweise kann in Schritt 33, mittels des maschinellen Lernsystems (23), für jede Zelle in dem Ausschnitt (21) der Karte (20), eine Größe, die den Bewegungsverlauf eines fiktiven Objektes charakterisiert, ermittelt und für das Anlernen des maschinellen Lernsystems (23) mittels des Optimierungsmoduls (44) verwendet werden.

Nachdem Schritt 33 ausgeführt wurde, kann beispielhaft Schritt 34 folgen. In Schritt 34 kann mittels der erfassten Daten von der Umgebungserfassungseinheit (11) eine Karte (20) der tatsächlichen Umgebung des Roboters (10) erstellt werden. Anschließend kann in Schritt 34 ein Aktionsraum des Roboters auf dieser Karte (20) ermittelt werden und mittels des maschinellen Lernsystems (23) eine Größe, die den Bewegungsverlauf des fiktiven Objektes charakterisiert, anhand eines vorgebbaren Ausschnittes (21) der Karte (20) bestimmt werden.

Optional kann in Schritt 34 abhängig von der ermittelten Größe, die den Bewegungsverlauf des fiktiven Objektes charakterisiert, und dem Aktionsraum des Roboters auf dem Ausschnitt (21) der Karte (20) eine Trajektorie des Roboters (10) geplant werden. Vorzugsweise kann eine Bewegung des Roboters (10) abhängig von der geplanten Trajektorie gesteuert werden. Bevorzugt kann die Trajektorie in Schritt 34 dergestalt geplant werden, dass die geplante Bewegung des Roboters (10) den ermittelten Bewegungsverlauf des fiktiven Objektes nicht beeinträchtigt. Optional kann entlang der Trajektorie eine Warteposition des Roboters (10) bestimmt werden. Die Warteposition kann dabei eine Position in dem Aktionsraum des Roboters (10) sein, in welcher der Roboter (10) pausiert, um den Bewegungsverlauf des eines fiktiven Objektes, aber auch eines realen Objektes entlang seiner geplanten Bewegung, nicht zu stören.

Optional kann nach Schritt 34, Schritt 35 eingeleitet werden. In Schritt 35 kann geprüft werden, ob sich entlang der geplanten Trajektorie ein Objekt aufhält. Die Detektion des Objektes in der Umgebung des Roboters (10) kann beispielhaft mittels der Umgebungserfassungseinheit (11) und des Robotersteuerungssystems (13) durchgeführt werden. Sobald ein Objekt detektiert wird, kann dieses in der Trajektorie des Roboters (10) berücksichtigt werden. Bevorzugt kann während des Schrittes 35 eine weitere erfasste Umgebungsgröße des Roboters (10), mittels der Erfassungseinheit (16), in der Trajektorie berücksichtigt werden. Zum Beispiel ermittelt die Erfassungseinheit (16) eine Raumtemperatur oder eine Außentemperatur. Diese ermittelte Temperatur kann von dem maschinellen Lernsystem (23) verwendet werden, um abhängig von dem Ausschnitt (21) und der ermittelten Raumtemperatur eine genauere Größe, die den Bewegungsverlauf eines fiktiven Objektes charakterisiert, zu ermitteln. Denn beispielsweise wird bei einer geringeren Raumtemperatur der Bewegungsverlauf eines fiktiven Objektes häufiger zur Bedienungseinheit einer Klimaanlage oder Heizungsanlage auftreten oder bei einer geringeren Außentemperatur wird der Bewegungsverlauf häufiger beispielsweise zu einer Garderobe auftreten.

Nachdem das Verfahren (30) mit Schritt 35 beendet wurde, kann das Verfahren (30) beispielshaft zyklisch mit Schritt 31 wieder begonnen werden, wenn beispielsweise festgestellt wird, dass das Verfahren zu ungenau ist oder wenn das Verfahren für eine weitere Anwendung angepasst werden soll. Denkbar ist aber auch, dass das Verfahren (30) nach Beendigung des Schrittes 35 zyklisch wieder Schritt 33 oder Schritt 34 oder Schritt 35 eingeleitet.

## Patentansprüche

1. Verfahren (30) zum Betreiben eines Robotersteuerungssystems (13), welches ein maschinelles Lernsystem (23) umfasst, wobei das maschinelle Lernsystem (23) eingerichtet ist, abhängig von einer Karte (20), welche einen Aktionsraum, in dem sich ein Roboter (10) bewegen kann, umfasst, eine Größe, die einen Bewegungsverlauf zumindest eines Menschen charakterisiert, der sich in dem Aktionsraum bewegen kann, zu ermitteln, umfassend:
- Bereitstellen wenigstens einer Trainingskarte, welche einen Trainingsaktionsraum, in dem sich der Roboter (10) bewegen kann, umfasst,
- Eintragen einer Größe, die den Bewegungsverlauf des zumindest einen Menschen charakterisiert, der sich in dem Trainingsaktionsraum bewegen kann, in dem Aktionsraum der Trainingskarte,
- Anlernen des maschinellen Lernsystems (23) derart, dass eine vom maschinellen Lernsystem (23) ermittelte Größe, die den Bewegungsverlauf des zumindest einen Menschen charakterisiert, sich auf einem vorgebbaren Ausschnitt der Trainingskarte der eingetragenen Größe, die den Bewegungsverlauf des zumindest einen Menschen charakterisiert, auf dem vorgebbaren Ausschnitt der Trainingskarte annähert.

2. Verfahren nach Anspruch 1, wobei das maschinelle Lernsystem (23) eingerichtet ist, die ermittelte Größe, die den Bewegungsverlauf des zumindest einen Menschen charakterisiert, abhängig von einer Form des Aktionsraums der Karte (20) zu ermitteln.

3. Verfahren nach einem der vorherigen Ansprüche, wobei der vorgebbare Ausschnitt (21) der Trainingskarte in eine Mehrzahl von Zellen aufgeteilt wird, wobei jeder Zelle ein Wert zugeordnet ist, der die Größe, die den Bewegungsverlauf des zumindest einen Menschen charakterisiert, charakterisiert.

4. Verfahren nach einem der vorherigen Ansprüche, wobei die Größe, die den Bewegungsverlauf des zumindest einen Menschen charakterisiert, eine Auftrittswahrscheinlichkeit und/oder eine Übergangswahrscheinlichkeit und/oder eine Aufenthaltswahrscheinlichkeit umfasst.

5. Verfahren nach einem der vorhergehenden Ansprüche, wobei eine Karte (20) einer Umgebung des Roboters (10) ermittelt wird, und ein Aktionsraum des Roboters (10) auf dieser Karte (20) ermittelt wird, und eine Größe, die den Bewegungsverlauf des zumindest einen Menschen charakterisiert, anhand des Aktionsraums auf einem vorgebbaren Abschnitt (21) dieser Karte (20) mittels des maschinellen Lernsystems (23) ermittelt wird.

6. Verfahren nach Anspruch 5, wobei eine Bewegung des Roboters (10) abhängig von der ermittelten Größe, die den Bewegungsverlauf des zumindest einen Menschen charakterisiert, gesteuert wird.

7. Verfahren nach Anspruch 6, wobei eine Trajektorie abhängig von der ermittelten Größe, die den Bewegungsverlauf des zumindest einen Menschen charakterisiert, geplant wird und eine Bewegung des Roboters (10) abhängig von der geplanten Trajektorie gesteuert wird.

8. Verfahren nach einem der Ansprüche 6 oder 7, wobei die Bewegung des Roboters (10) derart gesteuert wird, dass die Bewegung des Roboters (10) den ermittelten Bewegungsverlauf des zumindest einen Menschen nicht beeinträchtigt.

9. Verfahren nach einem der Ansprüche 5 bis 8, wobei eine Warteposition des Roboters (10) abhängig von der ermittelten Größe, die den Bewegungsverlauf des zumindest einen Menschen charakterisiert, ermittelt wird, wobei die Warteposition eine Position im Aktionsraum des Roboters (10) ist, welche durch die vom maschinellen Lernsystem (23) ermittelten Größe, die den Bewegungsverlauf des zumindest einen Menschen charakterisiert, derart charakterisiert ist, dass diese ermittelte Größe an der Warteposition einen Wert annimmt, der nicht größer ist als in einer vorgebbaren Umgebung der Warteposition' im Aktionsraum des Roboters (10).

10. Computerprogramm, welches Befehle umfasst, die beim Ausführen auf einem Computer bewirken, dass jeder Schritt des Verfahrens nach einem der Ansprüche 1 bis 9 ausgeführt wird.

11. Maschinenlesbares Speicherelement (12), auf dem das Computerprogramm nach Anspruch 10 gespeichert ist.

12. Vorrichtung, die eingerichtet ist, jeden Schritt eines der Verfahren nach einem der Ansprüche 1 bis 9 auszuführen.

## Claims

1. Method (30) for operating a robot control system (13) comprising a machine learning system (23), wherein the machine learning system (23) is designed to take a map (20) comprising an action space in which a robot (10) can move as a basis for ascertaining a variable that characterizes a movement profile of at least one human being who can move in the action space, comprising:
- providing at least one training map comprising a training action space in which the robot (10) can move,
- entering in the action space of the training map a variable that characterizes the movement profile of the at least one human being, who can move in the training action space,
- teaching the machine learning system (23) in such a way that, on a predefinable detail from the training map, a variable ascertained by the machine learning system (23) that characterizes the movement profile of the at least one human being approaches the entered variable that characterizes the movement profile of the at least one human being on the predefinable detail from the training map.

2. Method according to Claim 1, wherein the machine learning system (23) is designed to ascertain the ascertained variable that characterizes the movement profile of the at least one human being on the basis of a shape of the action space of the map (20).

3. Method according to either of the preceding claims, wherein the predefinable detail (21) from the training map is split into a plurality of cells, each cell having an associated value characterizing the variable that characterizes the movement profile of the at least one human being.

4. Method according to one of the preceding claims, wherein the variable that characterizes the movement profile of the at least one human being comprises a probability of appearing and/or a probability of changing and/or a probability of staying.

5. Method according to one of the preceding claims, wherein a map (20) of surroundings of the robot (10) is ascertained, and an action space of the robot (10) on this map (20) is ascertained, and a variable that characterizes the movement profile of the at least one human being is ascertained by means of the machine learning system (23) on the basis of the action space on a predefinable section (21) of this map (20).

6. Method according to Claim 5, wherein a movement of the robot (10) is controlled on the basis of the ascertained variable that characterizes the movement profile of the at least one human being.

7. Method according to Claim 6, wherein a trajectory is planned on the basis of the ascertained variable that characterizes the movement profile of the at least one human being, and a movement of the robot (10) is controlled on the basis of the planned trajectory.

8. Method according to either of Claims 6 and 7, wherein the movement of the robot (10) is controlled in such a way that the movement of the robot (10) does not adversely affect the ascertained movement profile of the at least one human being.

9. Method according to one of Claims 5 to 8, wherein a waiting position of the robot (10) is ascertained on the basis of the ascertained variable that characterizes the movement profile of the at least one human being, wherein the waiting position is a position in the action space of the robot (10) that is **characterized by** the variable, ascertained by the machine learning system (23), that characterizes the movement profile of the at least one human being in such a way that this ascertained variable assumes a value at the waiting position that is not greater than in predefinable surroundings of the waiting position in the action space of the robot (10).

10. Computer program comprising instructions that, when executed on a computer, cause each step of the method according to one of Claims 1 to 9 to be carried out.

11. Machine-readable storage element (12) on which the computer program according to Claim 10 is stored.

12. Apparatus designed to carry out each step of one of the methods according to one of Claims 1 to 9.

## Revendications

1. Procédé (30) permettant de faire fonctionner un système de commande de robot (13) qui comprend un système d'apprentissage automatique (23), le système d'apprentissage automatique (23) étant aménagé pour déterminer, en fonction d'une carte (20) qui comprend un espace d'action dans lequel un robot (10) peut se déplacer, une grandeur qui caractérise une séquence de déplacement d'au moins d'une personne qui peut se déplacer dans l'espace d'action, comprenant les étapes consistant à :
- fournir au moins une carte d'entraînement qui comprend un espace d'action d'entraînement dans lequel le robot (10) peut se déplacer,
- enregistrer une grandeur qui caractérise la séquence de déplacement de ladite au moins une personne qui peut se déplacer dans l'espace d'action d'entraînement dans l'espace d'action de la carte d'entraînement,
- entraîner le système d'apprentissage automatique (23) de telle sorte qu'une grandeur déterminée par le système d'apprentissage automatique (23), qui caractérise la séquence de déplacement de ladite au moins une personne, se rapproche sur un secteur prédéfinissable de la carte d'entraînement de la grandeur enregistrée, qui caractérise la séquence de déplacement de ladite au moins une personne, dans le secteur prédéfinissable de la carte d'entraînement.

2. Procédé selon la revendication 1, dans lequel le système d'apprentissage automatique (23) est aménagé pour déterminer la grandeur déterminée, qui caractérise la séquence de déplacement de ladite au moins une personne, en fonction d'une forme de l'espace d'action de la carte (20) .

3. Procédé selon l'une quelconque des revendications précédentes, dans lequel le secteur prédéfinissable (21) de la carte d'entraînement est divisé en une pluralité de cellules, chaque cellule étant associée à une valeur qui caractérise la grandeur qui caractérise la séquence de déplacement de ladite au moins une personne.

4. Procédé selon l'une quelconque des revendications précédentes, dans lequel la grandeur, qui caractérise séquence de déplacement de ladite au moins une personne, comprend une probabilité d'occurrence et/ou une probabilité de passage et/ou une probabilité de séjour.

5. Procédé selon l'une quelconque des revendications précédentes, dans lequel une carte (20) d'un environnement du robot (10) est déterminée, et un espace d'action du robot (10) sur cette carte (20) est déterminé, et une grandeur, qui caractérise la séquence de déplacement de ladite au moins une personne, est déterminée à l'aide de l'espace d'action dans un secteur prédéfinissable (21) de cette carte (20) au moyen du système d'apprentissage automatique (23).

6. Procédé selon la revendication 5, dans lequel un déplacement du robot (10) est commandé en fonction de la grandeur déterminée qui caractérise la séquence de déplacement de ladite au moins une personne.

7. Procédé selon la revendication 6, dans lequel une trajectoire est planifiée en fonction de la grandeur déterminée qui caractérise la séquence de déplacement de ladite au moins une personne, et un déplacement du robot (10) est commandé en fonction de la trajectoire planifiée.

8. Procédé selon l'une quelconque des revendications 6 ou 7, dans lequel le déplacement du robot (10) est commandé de telle sorte que le déplacement du robot (10) n'affecte pas la séquence de déplacement déterminée de ladite au moins une personne.

9. Procédé selon l'une quelconque des revendications 5 à 8, dans lequel une position d'attente du robot (10) est déterminée en fonction de la grandeur, qui caractérise la séquence de déplacement de ladite au moins une personne, la position d'attente étant une position dans l'espace d'action du robot (10) qui est **caractérisée par** la grandeur déterminée par le système d'apprentissage automatique (23) et qui caractérise la séquence de déplacement de ladite au moins une personne de telle sorte que cette grandeur déterminée adopte dans la position d'attente une valeur qui n'est pas supérieure à celle dans un environnement prédéfinissable de la position d'attente dans l'espace d'action du robot (10).

10. Programme informatique qui comprend des instructions qui provoquent à l'exécution sur un ordinateur l'exécution de chaque étape du procédé selon l'une quelconque des revendications 1 à 9.

11. Elément de stockage lisible par machine (12), sur lequel est stocké le programme informatique selon la revendication 10.

12. Dispositif qui est aménagé pour exécuter chaque étape d'un des procédés selon l'une quelconque des revendications 1 à 9.
